# EUROPEAN PATENT APPLICATION

(11) **EP 1 555 635 A1**
(43) Date of publication of application: **20.07.2005**
(21) Application number: 05000938.0
(22) Date of filing: 18.01.2005
(51) Int. Cl.: G06T 15/70, G06K 9/00, G10L 17/00, G10L 21/06

(54) **Image processing apparatus, method and program**

(30) Priority: 19.01.2004 JP 2004010660
(71) Applicant: NEC CORPORATION, Tokyo (JP)
(72) Inventor: Yoshimura, Shigehiro, Tokyo (JP)
(74) Representative: Glawe, Delfs, Moll & Partner

(57) **Abstract**

An emotion is decided based on both image and voice data, and then a decorated image or a substitute image is outputted. Further, a segment of voice signal is precisely determined for the analysis of the signal. Emotion analysis is conducted along with operations of extracting constituent elements of an image and continuously monitoring motions of the elements. A period during which no motion of lips is observed and a period during which no voice is inputted are used as a dividing point for voice signal, and an emotion in voice is decided. Furthermore, the result from the analysis of the image data and the result from the analysis of the voice data are weighted to eventually determine the emotion, and a synthesized image or a substitute image corresponding to the emotion is outputted.

## Description

### FIELD OF THE INVENTION

The present invention relates to the field of an image processing apparatus, method and program for decorating an image with decorative objects or substituting the image with a substitute image using image and voice information.

### BACKGROUND OF THE INVENTION

In a conventional image decorating system, as shown in Fig.1, an operator selected for an original image 800 a decorative object from a decoration menu 810, and then the decorated image 820 or a substitute image 830 was outputted. Further, in a conventional system where an image was analyzed, as shown in Fig.2, motions of parts such as eyebrows 910 or a mouth 911 in an original image 900 were analyzed to obtain an emotion, and a decorated image 920 or a substitute image 930 was outputted. In another conventional system where voice was analyzed, as shown in Fig.3, voice segments were cut out from voice signals to detect an emotion, analyzing frequencies, pitches, intonations, sound volume and so on, and a decorated image 1010 or a substitute image 1020 was outputted.

However, the prior art has following problems:

Firstly, at detecting emotion based only on an image, if person's expression is monotonous, or an image is unclear or cannot be obtained, it is difficult to determine the emotion. Secondly, at detecting emotion based only on voice, if voice is exaggeratedly expressed, it is likely that the emotion is erroneously determined. Thirdly, at cutting out voice signal based on silence, it is possible that the voice signal cannot be properly cut out because of the disturbance of external noise. In order to detect vocal emotion, it is necessary to cut out voice signal in an appropriate unit.

Japanese Patent application Laid-Open No. 10-228295 tries to recognize emotion by weighting both voice and image information. It presents the idea of recognizing emotion based on voice and image information and weights them empirically.

As described above, at the conventional way of detecting emotion based only on an image, if person's expression is monotonous, or an image is unclear or cannot be obtained, it is difficult to determine the emotion. At detecting emotion based only on voice, if voice is exaggeratedly expressed, the emotion can be erroneously determined. There is also a possibility that at cutting out voice signal based on silence, the voice signal cannot be properly cut out because of the disturbance of external noise.

### SUMMARY OF THE INVENTION

It is therefore an object of the present invention to provide the way to discriminate an operator's emotion based on information obtained through a camera and a microphone mounted on an information processor and also to produce the information processed according to the result of the discrimination, which is sent to a recipient. Especially, the present invention does not merely utilize one of voice information and image information at the discrimination of emotion but refers to both the voice and image information and improves the accuracy of the discrimination. Furthermore, when voice information is analyzed, the present invention even utilizes image information.

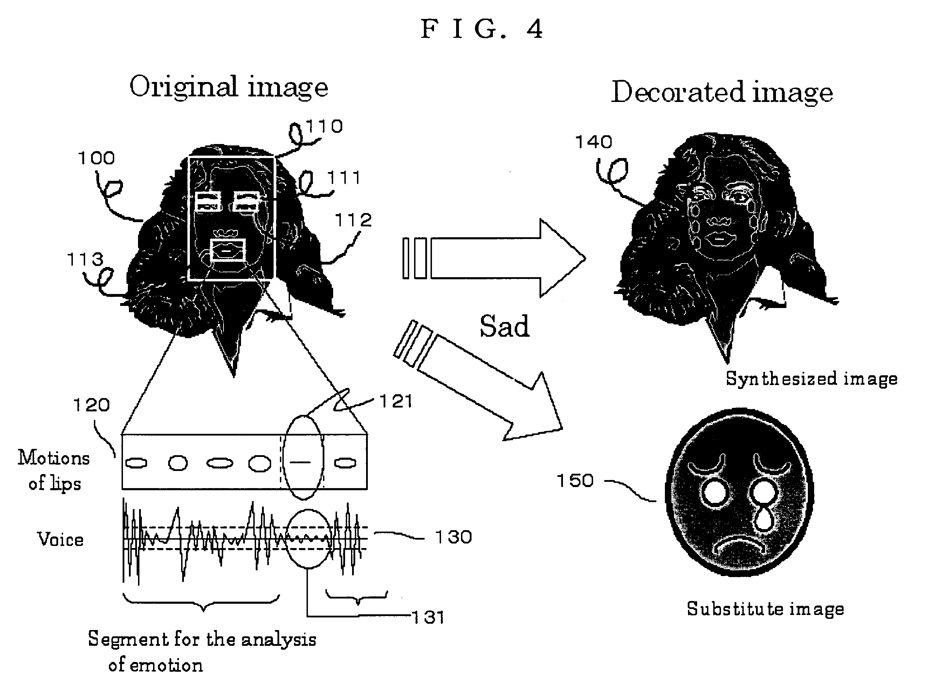

As can be seen from Fig.4, an emotion is perceived based on not only motions of constituent elements such as eyebrows 111, eyes 112 and a mouth (lips) 113 extracted from an image 100 but also the analysis of voice information. An image with decorative objects 140 or a substitute image 150 is outputted through a comprehensive emotion-decision process for both results.
At the analysis of voice signal, an analysis unit must be cut out from the voice signal. The unit is cut not only at a silent period but also based on motions of lips 113 extracted from an image. Consequently, the analysis unit can be cut out easily even in a noisy environment.

Accordingly to a first aspect of the present invention, for achieving the object mentioned above, there is provided an image processing apparatus for outputting a synthesized image or a substitute image for inputs of image and voice data, comprising an image analysis section for analyzing the image data and outputting a first piece of emotion information corresponding to the image data, a voice analysis section for analyzing the voice data and outputting a second piece of emotion information corresponding to the voice data, an image generating section for generating a third piece of emotion information from the first and second piece of emotion information, and outputting an image corresponding to the third piece of emotion information.

Said image analysis section may extract constituent elements from the image data and output constituent element information, which includes motion of the constituent elements, to said voice analysis section where the constituent element information is used for analyzing the voice data.

Further, motionless lips may be used as said constituent element information to divide the voice data.

Furthermore, said emotion information may paired with corresponding input data and stored in a storage device.

According to a second aspect of the present invention, there is provided an image processing method comprising the steps of analyzing image and voice data, and outputting a first and a second piece of emotion information corresponding respectively to the image data and the voice data, deciding a third piece of emotion information from the first and the second piece of emotion information and outputting a synthesized image or a substitute image corresponding to the third piece of emotion information.

Constituent elements being extracted from the image data, constituent elements information, which includes motions of the constituent elements, may be used to analyze the voice data.

Further, the constituent elements information may include motions of lips in the image data and be used for a dividing point of the voice data.

Furthermore, the first, the second and the third piece of emotion information may be paired with corresponding input data and stored in a storage device.

According to a third aspect of the present invention, there is provided a computer program embodied on a computer readable medium for causing a processor to perform operations of analyzing image data and voice data, outputting a first and a second piece of emotion information corresponding respectively to the image and the voice data, deciding a third piece of emotion information from the first and the second piece of emotion information, and outputting a synthesized image or a substitute image corresponding to the third piece of emotion information.

Constituent elements in the image data being extracted, constituent elements information, which includes motions of the constituent elements, may be used to analyze the voice data.

Further, the constituent elements information may include motions of lips in the image data and be used as a dividing point of the voice data.

Furthermore, the first, the second and the third piece of emotion information may be paired with corresponding input data and stored in a storage device.

### BRIEF DESCRIPTION OF THE DRAWINGS

The foregoing and other objects, aspects and advantages will be better understood from the following detailed description of preferred embodiments of the invention with reference to the following drawings:

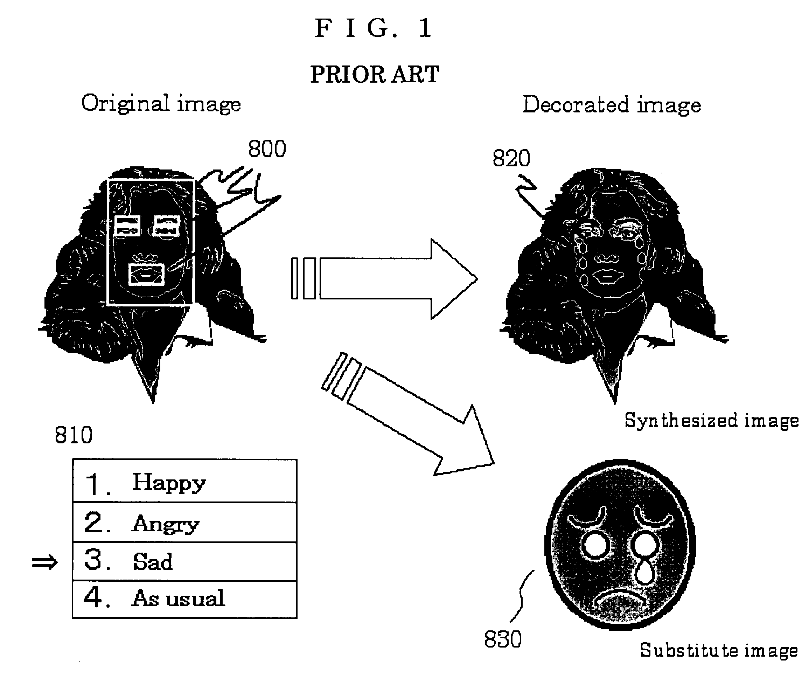

Fig.1 is a diagram showing a conventional method of adding decorative objects to an image;

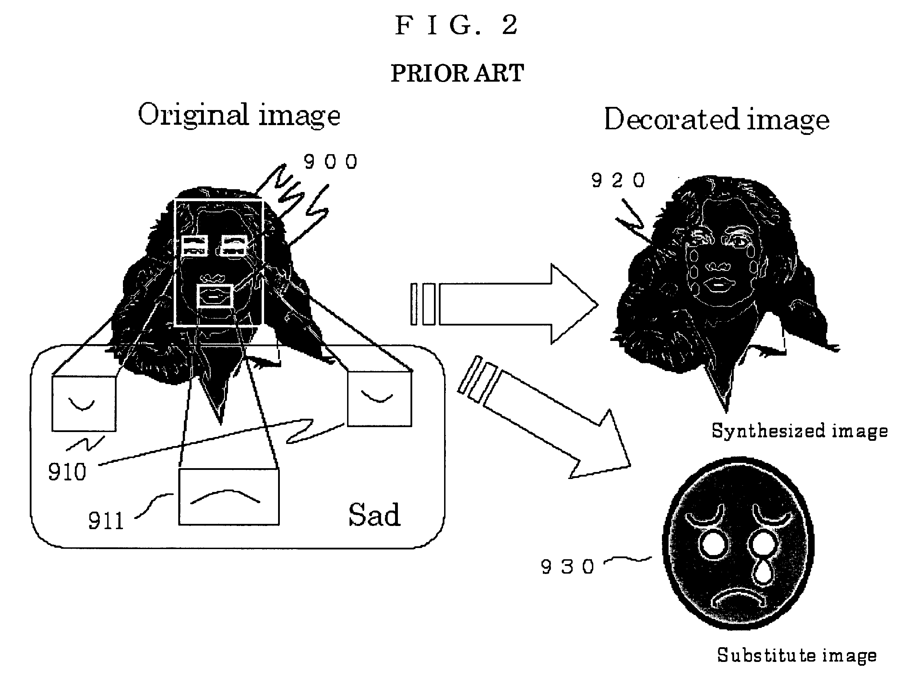

Fig.2 is a diagram showing a conventional method of detecting an emotion from an image;

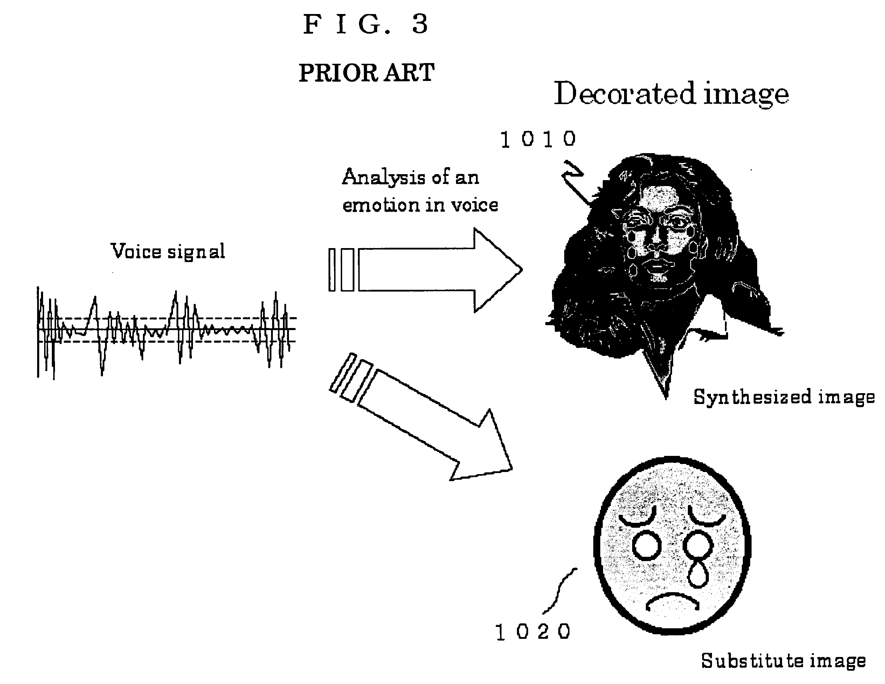

Fig.3 is a diagram showing a conventional method of detecting an emotion from voice;
Fig.4 is a diagram showing an overview of the preferred embodiments;

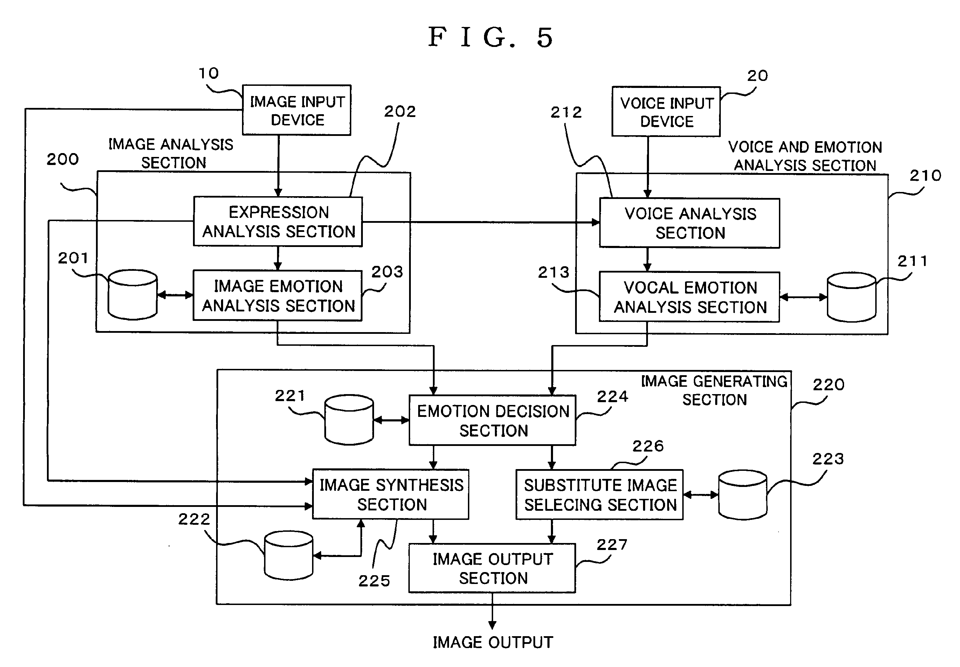

Fig.5 is a block diagram showing a structure of the preferred embodiments;

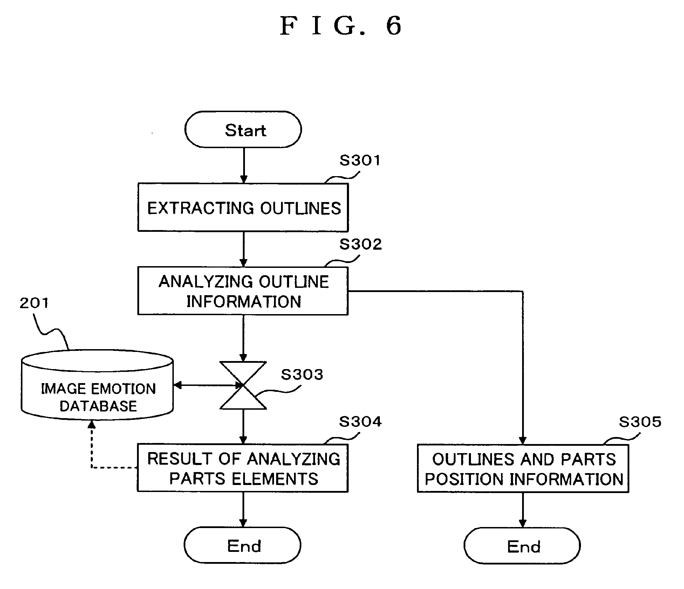

Fig.6 is a flowchart showing an operation of an image analysis section;

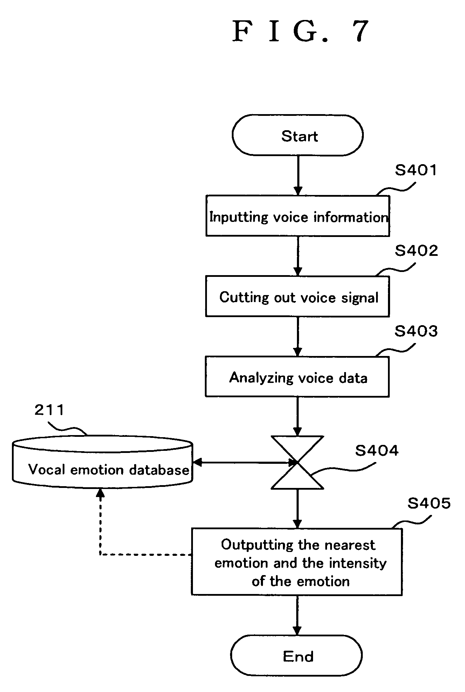

Fig.7 is a flowchart showing an operation of a voice and emotion analysis section;

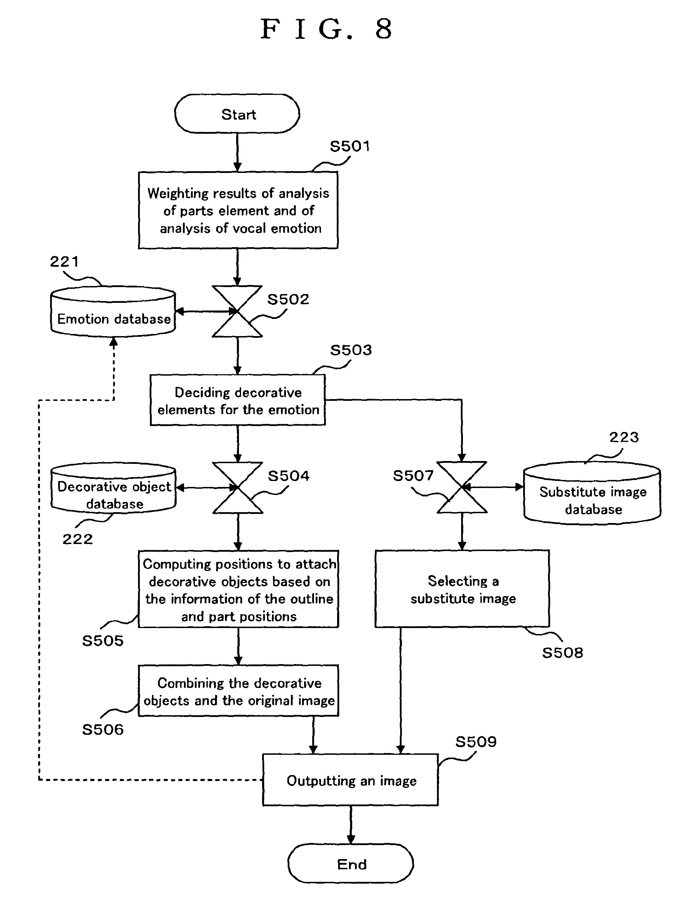

Fig.8 is a flowchart showing an operation of an image generating section;

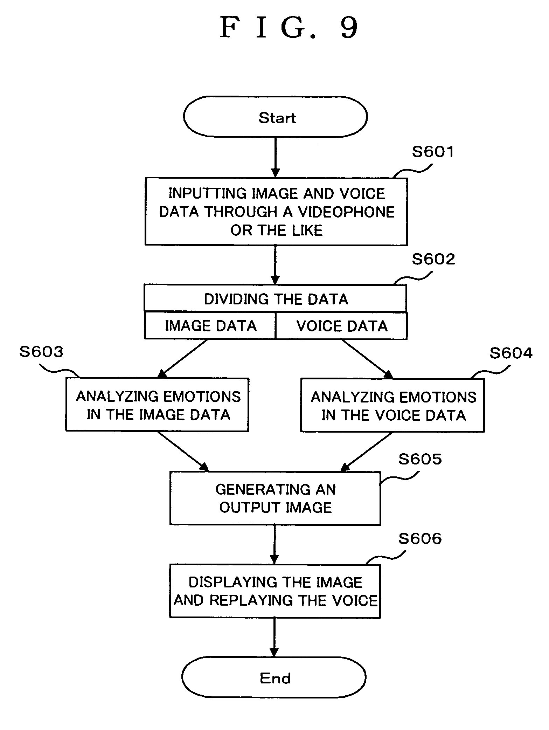

Fig.9 is a flowchart showing an operation in the second embodiments;

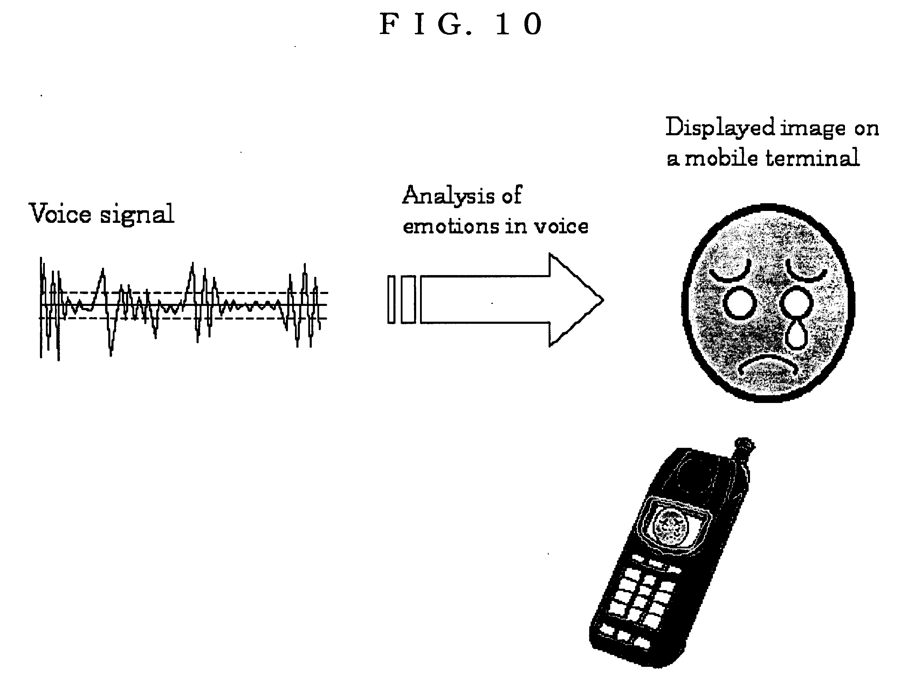

Fig.10 is a diagram showing an operation when only voice is inputted.

### DETAILED DESCRIPTION OF PREFERRED EMBODIMENTS

Preferred embodiments are described herein. In the following description, numerous specific details are set forth to provide a thorough understanding of embodiments of the invention.

Fig. 4 shows a first embodiment for decorating an image based on image and voice information. In this embodiment, an original image 100 is analyzed, and positions and motions of the parts, an outline of face 110, eyebrows 111, eyes 112 and a mouth (lips) 113 and so on, are extracted. The motions of every part are repeatedly analyzed and emotion information of an inputted image is outputted.

Further, through analysis of frequencies, intonations or displacement of voice information 130, emotion information of the inputted voice information is outputted. At the analysis, where the voice signal must properly be cut out, if only a silent period 131 is used as a trigger for the cut, there arises a problem that an aimed unit cannot be cut out under a noisy environment. To solve this problem, the present invention focuses attention on lips' motion 120 obtained at an image analysis and extracts an aimed unit from voice signals, using a period 131 in which a mouth does not move during a fixed period of time.

In this way, decorative objects 140 corresponding to the emotion are added to an original image and substitute data 150 corresponding to the emotion is outputted.

Here the present invention's configuration is explained, referring to Fig. 5. An image input device 10 is a camera or the like and obtains an image data. An image analysis section 200 comprises an image emotion database 201, an expression analysis section 202 and an image emotion analysis section 203. The section 202 extracts outlines and constituent parts from the image data inputted through the device 10, and analyzes motion of the outlines and the parts. The section 203 refers to the database 201 based on the analysis result at the section 202 and selects an emotion corresponding to the image information. The database 201 stores information of motions of the parts in a face and information of emotions corresponding to them.

A voice input device 20 is a microphone or the like and obtains voice data. A voice and emotion analysis section 210 comprises a vocal emotion database 211, a voice analysis section 212 and a vocal emotion analysis section 213. The section 212 receives information of motions of lips from the section 202 and the voice data, and cuts out voice signal. The section 213 specifies an emotion corresponding to the voice signal, referring to the database 211. The database 211 stores inflections of voice and the corresponding emotions.

An image generating section 220 comprises an emotion database 221, a decorative object database 222, a substitute image database 223, an emotion decision section 224, an image synthesis section 225, a substitute image selecting section 226 and an image output section 227.

The section 224 receives position information of the outlines and the parts, and the analysis result of the parts from the section 203, and further receives the result of the emotion analysis from the section 213. The section 224 eventually decides an emotion based on the results. The section 225 refers to the database 222 after receiving the emotion information from the section 224 and generates a composite image (decorated image) suitable for the data outputted from the device 10 and the section 202. The section 226 selects a substitute image that fits the emotion from the database 223. The section 227 outputs the decorated image or the substitute image outputted from the section 225 or 226.

### < Operation of the image analysis section>

Here an operation of the image analysis section 200 is explained, referring to fig. 6.

Outlines of a face are extracted based on the image data inputted into the section 200 from the device 10 (Step 301). Then position information of eyebrows, eyes, a nose, a mouth (lips) etc. that constitute the face is extracted and motions of each part are recorded (Step 302). Information that is analyzed here is the position information of the outlines and the parts, and the motion information of them. The position information is used to decide where to put decorative objects at the image generating section 220 (Step 305). Among the motion information of the parts, the motion information of lips is sent to the section 210 and is used to cut out segments from the voice data.

Transition of the motion information is continuously monitored and is compared with the database 201 (Step 303). Then information of the most appropriate emotion is outputted to the section 220 (Step 304). This result is used to improve the accuracy of judgment of emotion. For example, the result is fed back to a decision of emotion or stored in a database with an image data.

### <Operation of a voice and emotion analysis section>

Emotion is also decided from voice information that is inputted from the voice input device 20 into the voice and emotion analysis section 210. At a voice analysis, voice data must be divided into segments of a proper length. The data has been divided by a fixed time or a silent period in the prior art. In a noisy environment, however, dividing points cannot be appropriate if it depends only on the silent period. In this embodiment, motion of lips obtained at the image analysis section 200 is used for the analysis. A dividing point is a period in which lips are motionless for a certain time.

By using both the silent period and the motion of lips, the voice signal is more accurately divided. Operation of the section 210 is explained with reference to Fig. 7. When voice information is inputted (Step 401), voice signal is cut at a point where volume of voice is under a silent level or lips do not move for a fixed period of time (Step 402). Then frequencies, pitches, intonations, magnitude and other information of alterations (alterations of frequency and sound pressure, gradients of the alternation and so on) of the segmented voice signal are extracted (Step 403). The extracted data is compared with the data stored in the database 211 (Step 404). As a result, the most appropriate emotion is outputted into the section 220 (Step 405). The output can be stored in a database to improve the accuracy of emotion detection.

### <Operation of an image generating section 220>

Operation of the image generating section 220 is explained with reference to Fig. 8.

Each piece of the emotion information outputted from the section 200 and the section 210 is inputted into the section 220. Each piece of the emotion information is weighted respectively (Step 501). The computed emotion and the intensity of the emotion are compared with the database 211 (Step 502), and decorative objects for the emotion are decided (Step 503).

The way to decide the emotion at Step 503 is further explained. When the results of both analyses coincide, one of the results is used as an output. When one emotion cannot be selected from possible emotions at the section 210, a result obtained at the section 200 is given priority. In this way, even if a sudden and short sound is inputted, a procedure for deciding an emotion is supplemented and the decision is correctly made.

Further, when amplitude of voice signal does not reach a threshold for identifying an emotion at the section 210, a result obtained at the section 200 is adopted. In this way, the section 220 supplements a procedure for detecting a suppressed emotion in voice. Consequently, repressed feelings can also be expressed.

When an image has not enough information to decide an emotion (a value obtained from analysis of an image in the section 200 does not reach a threshold for identifying an emotion) or an image is so dark that useful information cannot be extracted, a result of a voice analysis is used instead.

As can be seen from the above, weighting is used to supplement a decision where an emotion is not distinctively discriminated or is not properly selected. In addition, a rule may be adopted beforehand that only one result from either the section 200 or 210 is used.

At adding decorative objects (elements) to an original image, suitable elements are picked up from the database 222 (Step 504). Then positions of the decorative objects are decided, referring to the position information of the parts of a face obtained at the analysis of outline information (Step 505). The selected decorative objects are synthesized into the computed positions in the image (Step 506) and the decorated image is outputted (Step 509).

When a substitute image is requested, a suitable substitute image matching to the decorative elements is selected from the database 223 (Steps 507 and 508) and the substitute image is outputted (Step 509). A user can correct a final output to be more adequate if the output is not what the user desired. The correction may be fed back to the decision of emotion, be paired with input information, for example, and used to improve accuracy of the decision of emotion. In this way, a decorated image or a substitute image is obtained from an original image.

### <The second embodiment>

Another embodiment of the present invention is explained with reference to Fig.9.

In this embodiment, an input device is a television telephone or a video in which voice and an image are inputted in a combined state. Even in this case, an original source (images and voice on the television telephone or in a video data) can be analyzed and decorated.

An operation of this embodiment is as follows: images and voice sent from a television telephone or the like are divided into image data and voice data (Steps 601 and 602). Both data are analyzed and emotions are detected from each data (Steps 603 and 604). Then an original image is synthesized with decorative objects which match to an emotion in the original image, and the decorated image is displayed and the voice is replayed. Instead, a substitute image suited for the emotion is displayed and the voice is replayed (Steps 605 and 606).

As shown in Fig. 10, when voice is the only input data or one establishes a speech communication through a telephone, the section 210 may analyze vocal signal and display a substitute image. In this way, a pseudo-videophone is realized.

These embodiments enable a sender of messages in a television telephone system to add decorative objects suited for his/her present emotion into a sending image or select a substitute image. The embodiments can also be applied to a received image to make a decorated image. Even if communication is established only by voice, the voice can be analyzed to extract an emotion and display a substitute image so that a pseudo-videophone is achieved.

As set forth above, the present invention combines the emotion information obtained from an image and the emotion information obtained from voice, and uses the combined information, which is more accurate emotion information, to produce a decorated image. Further, at the analysis of voice, voice signals are divided not only by a silent period but also by motions of lips obtained as a result of an image analysis so that the voice signals are properly divided even in a noisy environment. Furthermore, Since the result of emotion analysis is stored in a database for learning, the accuracy of emotion analysis for a specific expression of an individual is improved.

Although the invention has been described in its preferred form with a certain degree of particularity, obviously many changes and variations are possible therein and will be apparent to those skilled in the art after reading the foregoing description. It is therefore to be understood that the present invention may be presented otherwise than as specifically described herein without departing from the spirit and scope thereof.

## Claims

1. A image processing apparatus for outputting a synthesized image or a substitute image for inputs of image and voice data, comprising:
an image analysis section for analyzing the image data and outputting a first piece of emotion information corresponding to the image data;
a voice analysis section for analyzing the voice data and outputting a second piece of emotion information corresponding to the voice data; and
an image generating section for generating a third piece of emotion information from the first and second piece of emotion information, and outputting an image corresponding to the third piece of emotion information.

2. The image processing apparatus as claimed in claim 1, wherein said image analysis section extracts constituent elements from the image data and outputs constituent element information, which includes motion of the constituent elements, to said voice analysis section where the constituent element information is used for analyzing the voice data.

3. The image processing apparatus as claimed in claim 2, wherein motionless lips are used as said constituent element information to divide the voice data.

4. The image processing apparatus as claimed in claim 1, 2 or 3, wherein said emotion information is paired with corresponding input data and stored in a storage device.

5. An image processing method comprising the steps of:
analyzing image and voice data, and outputting a first and a second piece of emotion information corresponding respectively to the image data and the voice data;
deciding a third piece of emotion information from the first and the second piece of emotion information; and
outputting a synthesized image or a substitute image corresponding to the third piece of emotion information.

6. The image processing method as claimed in claim 5, wherein constituent elements being extracted from the image data, constituent elements information, which includes motions of the constituent elements, is used to analyze the voice data.

7. The image processing method as claimed in claim 6, wherein the constituent elements information includes motions of lips in the image data and is used for a dividing point of the voice data.

8. The image processing method as claimed in claim 5, wherein the first, the second and the third piece of emotion information are paired with corresponding input data and stored in a storage device.

9. A computer program embodied on a computer readable medium for causing a processor to perform operations comprising:
analyzing image data and voice data, and outputting a first and a second piece of emotion information corresponding respectively to the image and the voice data;
deciding a third piece of emotion information from the first and the second piece of emotion information; and
outputting a synthesized image or a substitute image corresponding to the third piece of emotion information.

10. The computer program as claimed in claim 9, wherein constituent elements in the image data being extracted, constituent elements information, which includes motions of the constituent elements, is used to analyze the voice data.

11. The computer program as claimed in claim 10, wherein the constituent elements information includes motions of lips in the image data and is used as a dividing point of the voice data.

12. The computer program as claimed in claim 9, wherein the first, the second and the third piece of emotion information are paired with corresponding input data and stored in a storage device.
